# EUROPEAN PATENT APPLICATION

(11) **EP 2 807 991 A1**
(43) Date of publication of application: **03.12.2014**
(21) Application number: 14165353.5
(22) Date of filing: 22.04.2014
(51) Int. Cl.: A61C 15/04, A61Q 11/00

(54) **Dental flossers**

(30) Priority: 02.05.2013 US 201313875916
(71) Applicant: Ranir LLC, Grand Rapids, MI 49512 (US)
(72) Inventor: Kollar, Kevin J., Ada, MI Michigan 49301 (US); Crossman, Scott P., Rockford, MI Michigan 49341 (US); Stebila, Jonathan M., Grand Rapids, MI Michigan 49503 (US); Huffman, Brett, Grand Rapids, MI Michigan 49506 (US); Peliotes, James S., Ada, MI Michigan 49301 (US)
(74) Representative: Lewin, David Nicholas

(57) **Abstract**

A dental flosser design utilizes the shape of the handle, the positioning of one or more floss strands and the shape and materials of the floss strands to increase the ease of use for the consumer. In one embodiment, the flosser combines the advantages of an F-shaped flosser for flossing the front teeth with the advantages of a Y-shaped flosser for flossing the rear teeth by providing a flosser with a handle having first and second longitudinal ends, with a first flosser head extending from the first longitudinal end and the second flosser head extending from the second longitudinal end. The first flosser head may form an F-shaped flosser at the first end of the handle, wherein the flosser head is generally aligned in the same plane as the gripping surfaces of the handle, the with the flosser arms extending at an angle to the longitudinal length of the handle. The second flosser head may form a Y-shaped flosser at the second end of the handle, with the arms of the flosser head extending generally parallel to the longitudinal length of the handle. Thus, a user can manipulate a single flosser device, using a single handle, with the benefits of both an F-shaped flosser and a Y-shaped flosser.

## Description

### BACKGROUND OF THE INVENTION

The present invention is in the field of disposable dental floss holders commonly called dental flossers, and more particularly to dental flossers which include a handle and a head part with spaced-apart arms supporting a strand of dental floss extended between and fixed to the distal ends of the arms.

In more recent years dental flossers have become widely used for removing plaque from tooth surfaces, particularly from the generally facing surfaces of adjacent teeth and for removing food particles from the interstices between adjacent teeth. Such interstices may be empty spaces or may be merely the interface areas of contact between the surfaces of adjacent teeth. For many persons a dental flosser is substantially easier to use than a conventional strand of dental floss wrapped about fingers of both hands and manipulated between teeth, by having fingers of one hand in the mouth and fingers of the other hand outside the mouth.

Typical prior art flossers are disclosed in U.S. Patents Nos. 5,538,023 and 4,006,750 to Chodorow, No. 7,487,785 to Dougan et al., No. 6,756,158 to Gwen, U.S. Application No. 2008/0149134 to Crossman, and No. 7,204,257 to Crossman. Many dental flossers employ nylon floss because it was well known, readily available, relatively inexpensive and relatively easy to use in multi-cavity injection molding machines. Over time dental flosses made from alternative materials have been developed, particularly polytetrafluoraethylene ("PTFE") commonly known as TEFLON^{®}, and ultra high molecular weight polyethylene ("UHMWPE"), the latter dental floss disclosed in U.S. Pat No. 5,113,880 to Honda.

Two commonly recognized styles of dental flosser are the "F-shaped" flosser and the "Y-shaped" flosser. The F-shaped flosser generally includes an elongated handle and a head at one end of the handle, the head including a pair of spaced apart arms for supporting a strand of floss. The handle includes upper and lower surfaces for gripping by the user, and these surfaces are generally parallel to the upper and lower surfaces of the arms and generally parallel to the strand of floss, such that the entire flosser lies in a single plane. The handle commonly extends at an angle, in some cases a right angle, with respect to the arms, providing the flosser with a shape similar to the letter "F." These F-style flossers are known for their ease of use when a user is flossing between the front teeth.

The Y-shaped flosser also generally includes an elongated handle and a head at one end of the handle; however, in the case of the Y-shaped flosser, the handle generally extends from the center of the head, and its longitudinal length is generally parallel to the length of the arms, providing it with a shape similar to the letter "Y." These Y-shaped flossers are known for their ease of use when a user is flossing between the back teeth (i.e., molars).

### SUMMARY OF THE INVENTION

The present invention provides a dental flosser design that utilizes the shape of the handle, the positioning of one or more floss strands and the shape and materials of the floss strands to increase the ease of use for the consumer.

In one embodiment, the flosser combines the advantages of an F-shaped flosser for flossing the front teeth with the advantages of a Y-shaped flosser for flossing the rear teeth by providing a flosser with a handle having first and second longitudinal ends, with a first flosser head extending from the first longitudinal end and the second flosser head extending from the second longitudinal end. The first flosser head may form an F-shaped flosser at the first end of the handle, wherein the flosser head is generally aligned in the same plane as the gripping surfaces of the handle, with the flosser arms extending at an angle to the longitudinal length of the handle. The second flosser head may form a Y-shaped flosser at the second end of the handle, with the arms of the flosser head extending generally parallel to the longitudinal length of the handle. Thus, a user can manipulate a single flosser device, using a single handle, with the benefits of both an F-shaped flosser and a Y-shaped flosser.

In another embodiment, a flosser is provided that includes two flosser heads extending from the same end of a handle. The flosser heads may extend in different directions from one another, and in one embodiment they are mirror images of each other, enabling the flossing of both the upper teeth and the lower teeth simultaneously.

In yet another embodiment, a flosser is provided with a strand of floss that has a variable thickness along its length. For instance, a central portion of the floss may be narrower than the end portions of the floss. This variable thickness may be provided by using an expandable dental floss material, with portions of the expandable dental floss material being pre-expanded to provide areas of greater thickness. This type of floss device may be beneficial for users by providing a narrow floss region that is easier to insert between the teeth, and a widened floss region that may provide greater surface area for removing plaque and debris. The variable thickness strand of dental floss may be used in connection with many flosser handle embodiments, such as an F-shaped flosser, a Y-shaped flosser, or the dual headed flossers noted above.

Other flosser embodiments that provide benefits for flossing in addition to aesthetically pleasing handle design are also described herein. Before the embodiments of the invention are explained in detail, it is to be understood that the invention is not limited to the details of operation or to the details of construction and the arrangement of the components set forth in the following description or illustrated in the drawings. The invention may be implemented in various other embodiments and of being practiced or being carried out in alternative ways not expressly disclosed herein. Also, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof. Further, enumeration may be used in the description of various embodiments. Unless otherwise expressly stated, the use of enumeration should not be construed as limiting the invention to any specific order or number of components. Nor should the use of enumeration be construed as excluding from the scope of the invention any additional steps or components that might be combined with or into the enumerated steps or components.

### BRIEF DESCRIPTION OF THE DRAWINGS

Fig. 1 is a perspective view of a dental flosser according to a first embodiment of the present invention.
Fig. 2 is a right side view of the dental flosser, the left side view being a mirror image thereof.
Fig. 3 is a front view thereof.
Fig. 4 is a rear view thereof.
Fig. 5 is a top view thereof.
Fig. 6 is a bottom view thereof.
Fig. 7 is a perspective view of a dental flosser according to a second embodiment of the present invention.
Fig. 8 is a right side view thereof.
Fig. 9 is a left side view thereof.
Fig. 10 is a front view thereof.
Fig. 11 is a rear view thereof.
Fig. 12 is a top view thereof.
Fig. 13 is a bottom view thereof.
Fig. 14 is a perspective view of a dental flosser according to a third embodiment of the present invention.
Fig. 15 is a right side view thereof.
Fig. 16 is a left side view thereof.
Fig. 17 is a front view thereof.
Fig. 18 is a rear view thereof.
Fig. 19 is a top view thereof.
Fig. 20 is a bottom view thereof.
Fig. 21 is a perspective view of a dental flosser according to a fourth embodiment of the present invention.
Fig. 22 is a right side view thereof.
Fig. 23 is a left side view thereof.
Fig. 24 is a front view thereof.
Fig. 25 is a rear view thereof.
Fig. 26 is a top view thereof.
Fig. 27 is a bottom view thereof.
Fig. 28 is a perspective view of a dental flosser according to a fifth embodiment of the present invention.
Fig. 29 is a right side view of the dental flosser, the left side view being a mirror image thereof.
Fig. 30 is a front view of the dental flosser, the rear view being a mirror image thereof.
Fig. 31 is a top view thereof.
Fig. 32 is a bottom view thereof.
Fig. 33 is a perspective view of a dental flosser according to a sixth embodiment of the present invention.
Fig. 34 is a right side view thereof.
Fig. 35 is a left side view thereof.
Fig. 36 is a front view thereof.
Fig. 37 is a rear view thereof.
Fig. 38 is a top view thereof.
Fig. 39 is a bottom view thereof.
Fig. 40 is a perspective view of a dental flosser according to a seventh embodiment of the present invention.
Fig. 41 is a right side view of the dental flosser, the left side view being a mirror image thereof.
Fig. 42 is a front view of the dental flosser, the rear view being a mirror image thereof.
Fig. 43 is a top view thereof.
Fig. 44 is a bottom view thereof.
Fig. 45 is a view of a first alternative embodiment of an floss strand.
Fig. 46 is a view of a second alternative embodiment of a floss strand.
Fig. 47 is a view of a third alternative embodiment of a floss strand.
Fig. 48 is a view of a fourth alternative embodiment of a floss strand.
Fig. 49 is a view of a fifth alternative embodiment of a floss strand.
Fig. 50 is a close up view of a portion of a flosser handle including a pick that can be accessed by folding the end of the handle in the direction of the arrow.
Fig. 51 is a top view of a dental flosser according to an eighth embodiment.
Fig. 52 is a right side view thereof.
Fig. 53 is a front view thereof.
Fig. 54 is a bottom view thereof.
Fig. 55 is a perspective view thereof.
Fig. 56 is another perspective view thereof.
Fig. 57 is another perspective view thereof.
Fig. 58 is another perspective view thereof.
Fig. 59 is a left side view thereof.
Fig. 60 is a rear view thereof.
Fig. 61 is another perspective view thereof.
Fig. 62 is another perspective view thereof.

### DETAILED DESCRIPTION OF THE CURRENT EMBODIMENTS

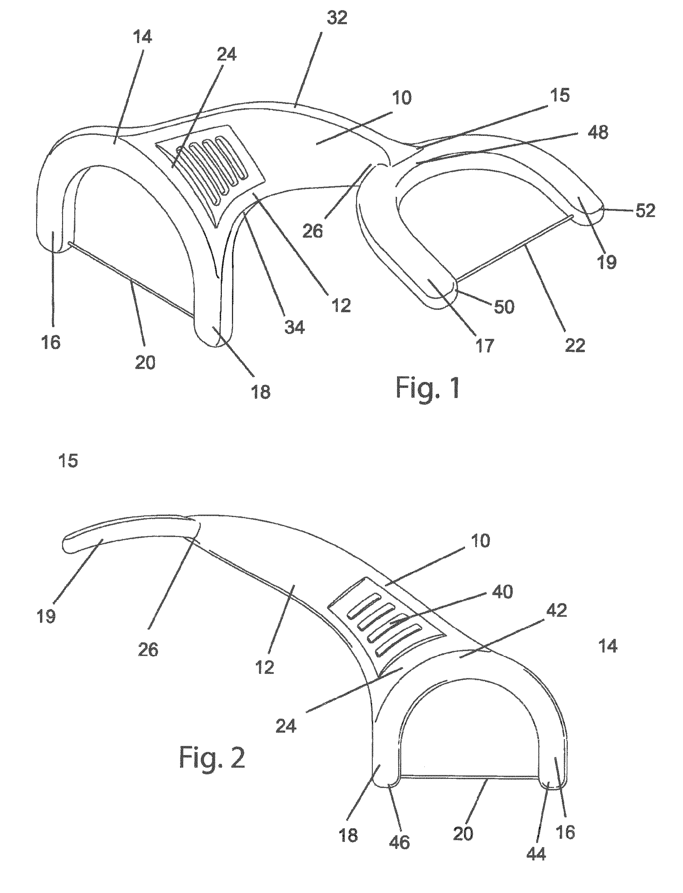

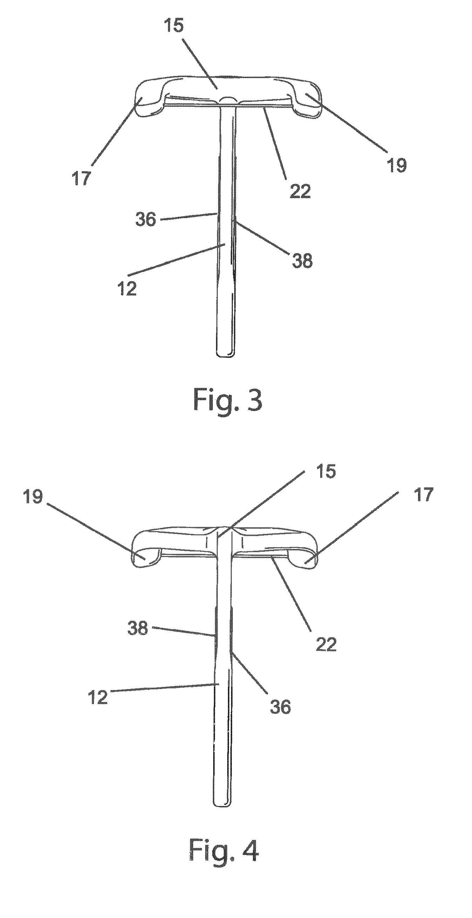

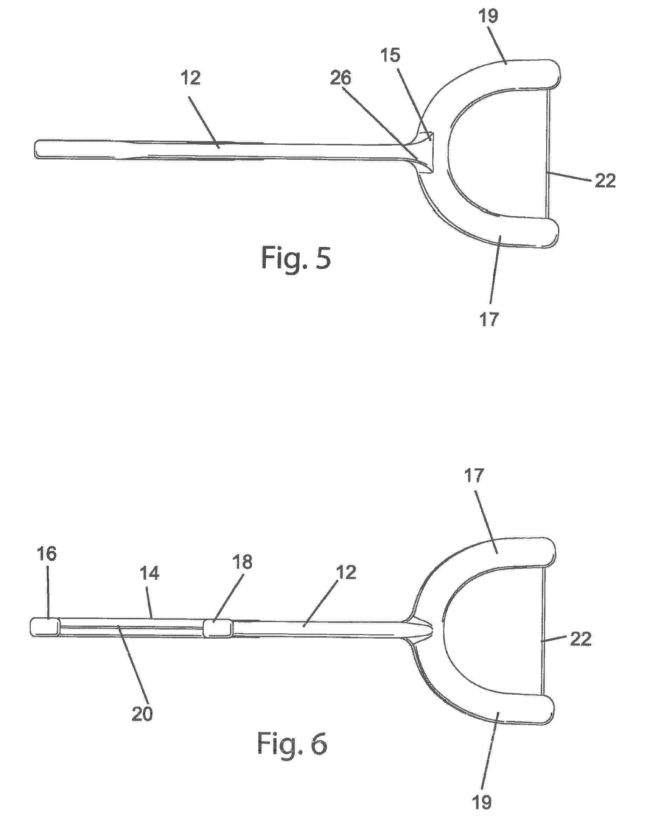

A dental flosser according to one embodiment of the present invention is shown in Figs. 1-6 and generally designated 10. In this embodiment, the flosser 10 is formed of an injection-molded plastic material, and includes a handle part 12 and a pair of flosser heads 14, 15. The first flosser head 14 includes a pair of arms 16, 18 supporting a first strand of floss 20 extending therebetween, and the second flosser head 15 includes a pair of arms 17, 19 supporting a second strand of floss 22 extending therebetween. The flosser heads 14, 15 are arranged to space apart the strands of floss with respect to one another, and to position each strand of floss 20, 22 in a different relationship with respect to the handle 12 such that a user can use the first strand of floss 20 to floss one set of teeth for flossing and the user can use the second strand of floss 22 to floss a different set of teeth for flossing.

More particularly, in the embodiment shown in Figs. 1-6 the handle part 12 defines a longitudinal length having first and second longitudinal ends 24, 26. The first flosser head 14 extends from the first longitudinal end 24 and the second flosser head 26 extends from the second longitudinal end 26. As shown, the handle 12 further includes a top edge 32, a bottom edge 34 opposite the top edge 32, and side surfaces 36 and 38 that can be readily grabbed and supported between the thumb and fingers of a user. In one embodiment, the side surfaces 36 and 38 may be generally parallel to one another, such that both are generally parallel to a first plane. Although the side surfaces 36, 38 are illustrated as being flat, they may otherwise be rounded or have another desired shape, for instance, for increased ease of gripping by a user. The side surfaces 36, 38 may define ridges 40 for gripping by the user and in an alternative embodiment may be overmolded with a grip material.

In one embodiment, the first flosser head 14 extends from the first longitudinal end 24 of the handle 12. The first flosser head 14 includes a base portion 42, and a pair of arms 16, 18 extending from the base portion 42. As illustrated, the base portion 42 and the arms 16, 18 form a generally U-shape, with the arms 16, 18 being spaced apart from one another to form a gap there between. The first strand of floss 20 extends in tension between the ends 44, 46 of the arms to span the gap. In the illustrated embodiment, the arms 44, 46 and first strand of floss 20 all lie in a plane, which may be parallel to the first plane defined by the side surfaces 36, 38 of the handle 12. The arms extend in a direction that forms an angle with the longitudinal length of the handle, creating a generally F-shaped style of flosser at the first end 24. In the illustrated embodiment, the arms extend at about a 45 degree angle with respect to the longitudinal length of the handle, however the angle may be varied depending on the application.

The second flosser head 15 extends from a location on the handle 12 that is spaced apart from the location of the first flosser head 14. As illustrated, the second flosser head 15 orients the second strand of floss 22 in a direction that is different from that of the first strand of floss 20. In this way, the two different strands of floss 20, 22 can be used in different ways by the user to access different areas of the mouth. More particularly, in the illustrated embodiment, the second flosser head 15 extends from the second longitudinal end 26 of the handle 12. The second flosser head 15 includes a base portion 48 attached to the handle 12, and a pair of arms 17, 19 extending from the base portion 48. Similar to the first flosser head 14, the base 48 and arms 17, 19 form a U-shape and the arms 17, 19 are spaced apart from each other. The strand of floss 22 extends in tension between the distal end portions 50, 52 of the arms 17, 19. As shown, the base 48, arms 17, 19 and strand of floss 22 lie in the same plane. This second plane is oriented differently than the first plane defined by the first flosser head 14. In one embodiment, this second plane is oriented perpendicular to the first plane defined by the first floss strand 20, such that the first and second floss strands 20, 22 are perpendicular to each other. Also as illustrated, the second plane 22 is perpendicular to the side surfaces 36, 38 of the handle 12. Thus, the strands of floss 20, 22 are oriented different from one another, and are also oriented differently with respect to the handle 12. Furthermore, the arms 17, 19 of the second floss head 15 extend in a direction that is generally parallel to the longitudinal length of the handle 12, providing a generally Y-shaped flosser at the second end 26. In this way, a user manipulating the handle 12 by gripping the side surfaces 36, 38 between the thumb and forefinger would be able to select the one of the two flosser heads that is most appropriate for engaging each particular tooth.

In one embodiment, the strands of floss 20, 22 may be made of PTFE for its extremely slippery (low coefficient of friction) characteristic, or otherwise made of UHMWPE for its greater strength and resistance to stretching or shredding. The UHMWPE strands may be between about 100 and 1500 denier, and in a more particular embodiment may be 400 denier UHMWPE strands that include 120 microfilaments configured with a Z twist, as are available from Honeywell International Inc. or other commercial suppliers. The PTFE or Teflon^{®} floss is also readily available from many commercial sources, and in one embodiment, the PTFE floss is between about 300 and 2500 denier floss. In a more particular embodiment, the PTFE floss is a 1200 denier PTFE floss. Other floss materials, such as nylon, may alternatively be used.

Manufacture of the flosser 10 may be conducted in a conventional manner, for instance, by injection molding the flosser 10 in a mold, with the strands of floss placed in the mold prior to molding, such that the arms 16, 18, 17, 19 of the flosser 10 are molded about the strands of dental floss 20, 22. In one embodiment, multiple flossers 10 may be formed simultaneously in a multi-cavity mold where the plurality of cavities are aligned so that each of the dual strands can be extended in a straight line transversely across all the arms of the aligned flosser cavities. Strands of floss are positioned in grooves in a mold surface between the cavities, so that on closing the mold parts the strands are not crushed. The strands are placed in tension, (a) to make sure they remain straight while traversing the arms of the flosser cavities and remain in the grooves between the cavities, and (b) to incorporate a pre-stretch in each strand to reduce the stretching that might occur in use. In this pre-injection stage, a PTFE strand may be stretched about 15% and the UHMWPE strand may be stretched about 3-½%. In one method of manufacture, the UHMWPE strands are given about four twists per inch by known twisting techniques to enhance the strength and resistance to stretching of the UHMWPE floss strand to about 3% as compared to a stretch of about 3-½% without the further twists. In one embodiment, the flosser may also be manufactured such that the floss strands have differing amounts of tension. For example, one of the floss strands (whether the strands are formed from the same or different materials) may be provided with a greater amount of pre-stretch than the other strand, or one of the floss strands may be placed in the mold cavity with a predetermined amount of slack.

A variety of different injection molded plastics may be used for forming the handle part 12 and the head parts 14, 15. Current examples include polystyrene, ABS, polyethylene or polypropylene. These plastics may have melting temperatures below that of PTFE, so that the dental floss will not be melted or otherwise damaged when the molten plastic for the arms of the floss head is injected around and about the outer surfaces of the portions of the floss extending across the arm portions of the flosser in the mold cavity.

Conventional multi-cavity injection mold and manufacturing techniques produce skeleton-connected aligned molded flossers, with a set of continuous dual strands of floss extending transversely through the end portion of the arms of the aligned flossers. These flossers may subsequently be separated by severing the segments of floss extending between the arms of adjacent flossers where the severing may be made by a hot knife, laser or flame. By this technique the exposed ends of the strands are melted and formed into beads having greater diameter or greater cross-sectional area than that of the original strands, thus restricting the portion of each strand embedded in the arm from pulling through during use of the flosser. The bead may be a single mass of the melted fibers of the strands or multiple tiny beads of the coalesced ends of the fibers and appearing somewhat like a cauliflower. In another embodiment, the adjacent flossers 10 may be separated by cutting the floss strands with a different cutting device that does not melt the strands. If necessary, the strands may be retained in the floss arms by knotting the ends of the strands, or by chemically bonding the floss material to the material used to form the flosser arms 16, 17, 18, 19.

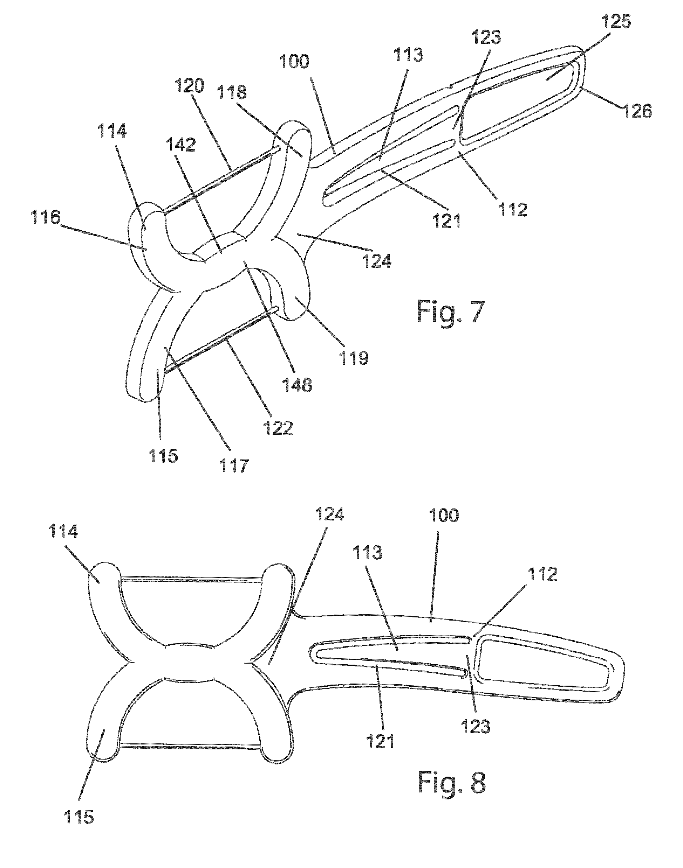

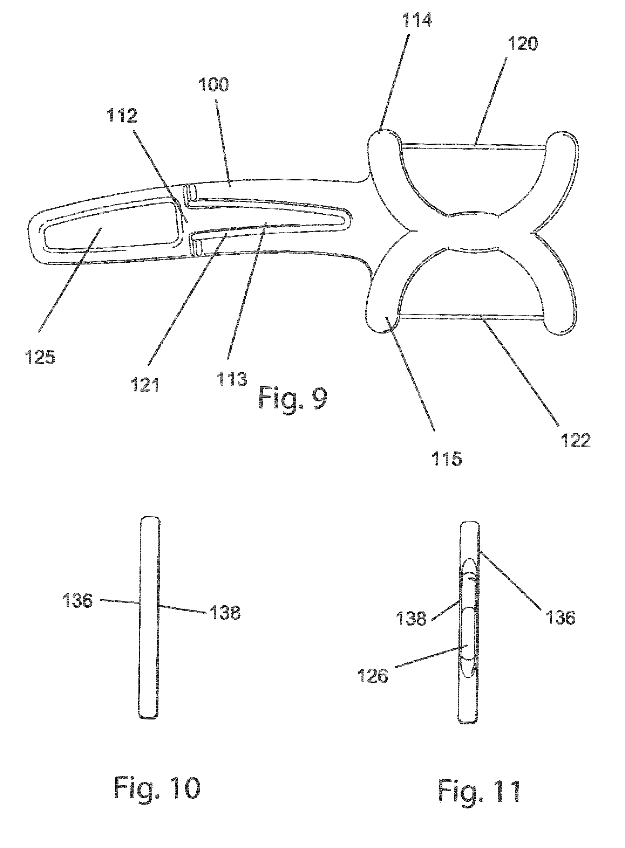

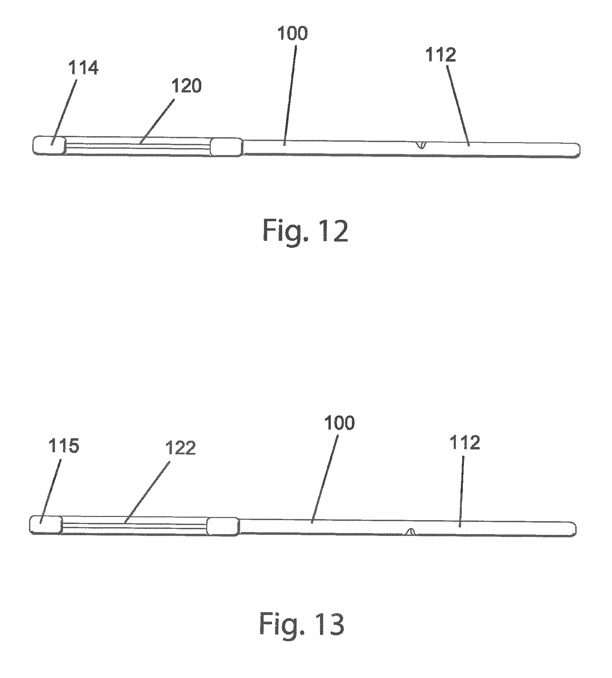

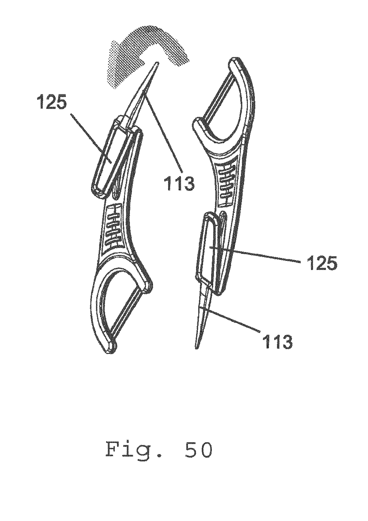

A second embodiment of the dental flosser 100 is shown in Figs. 7-13. In this embodiment, the flosser 100 includes a handle 112 having first and second longitudinal ends 124, 126 defining a longitudinal length therebetween. The handle includes first and second side surfaces 136, 138 that are generally flat and parallel with one another, such that they lie parallel to a common plane. In the illustrated embodiment, the handle 112 includes an integrally formed interproximal pick 113. The handle 112 defines a central opening 121 extending through the side surfaces 136, 138, and the pick 113 extends into the central opening 121 from one end 123 of the central opening 121. In use, a user may access the pick 113 as shown in Fig. 50, by bending the distal end portion 125 of the handle 112 to pivot and expose the pick 113.

In this second embodiment of the flosser 100, a first flosser head 114 and a second flosser head 115 both extend from the first longitudinal end 124 of the handle 112. As illustrated, the heads 114, 115 lie in the same plane, but extend in opposite directions. The base 142 of the first head 114 and the base 148 of the second head may intersect one another, and in the illustrated embodiment are generally coterminous with each other. The arms 116, 118 extend from the first base 142 in a first direction to support the first floss strand 120 therebetween, and the arms 117, 119 of the second head 115 extend from the base 148 in a second direction opposite from the first direction, wherein the arms 117, 119 are aligned with the arms 116, 118 and the second strand of floss 122 is spaced from the first strand 120 and generally parallel to the first strand 120. In one embodiment, the floss strands 120, 122 are also aligned generally parallel with the longitudinal length of the handle 112 with each strand of floss 120, 122 approximately equidistant from a line defined by the longitudinal centerline of the handle 112. In this second embodiment, the spaced apart, parallel strands of floss 120, 122 can be inserted into a user's mouth simultaneously, with one strand of floss engaging the user's upper teeth and the other stand of floss 122 simultaneously engaging the user's lower teeth. In an alternative embodiment, the flosser heads 114, 115 may be angled with respect to the longitudinal length of the handle, such that the strands of floss 120, 122 extend at an angle with respect to one another. In another alternative embodiment, the flosser heads 114, 115 may be angled with respect to one another.

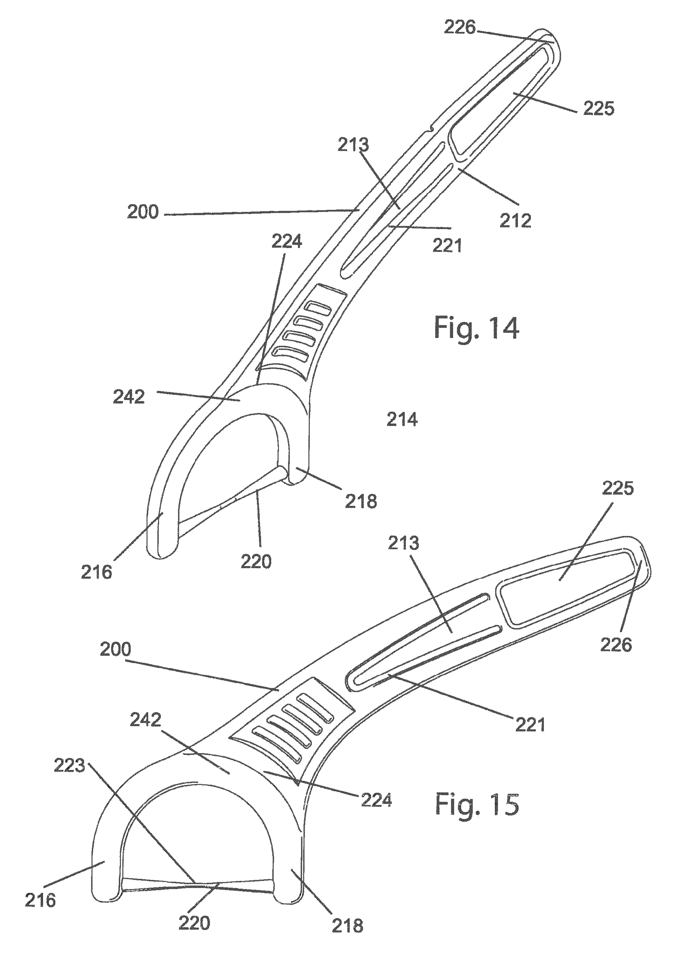

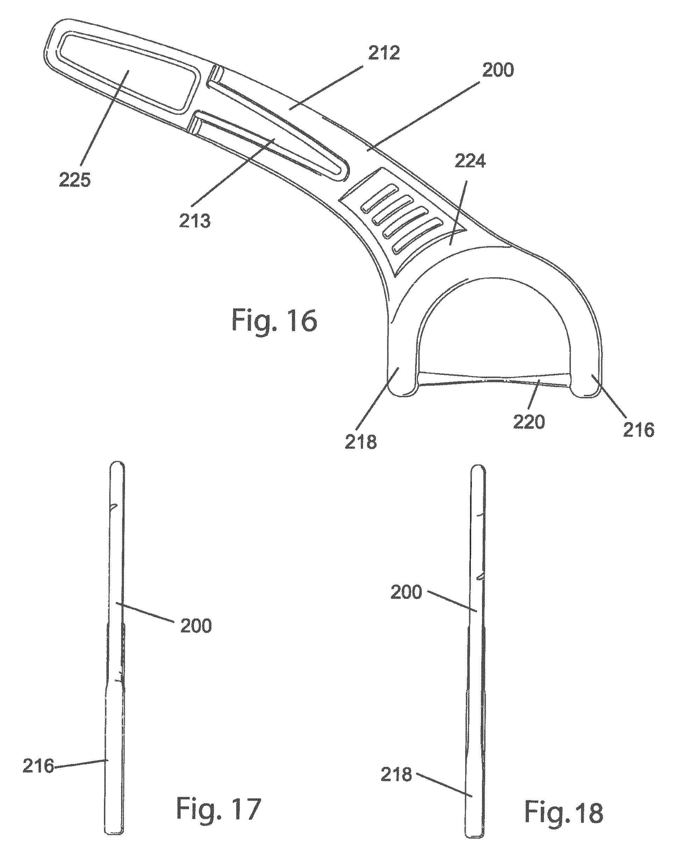

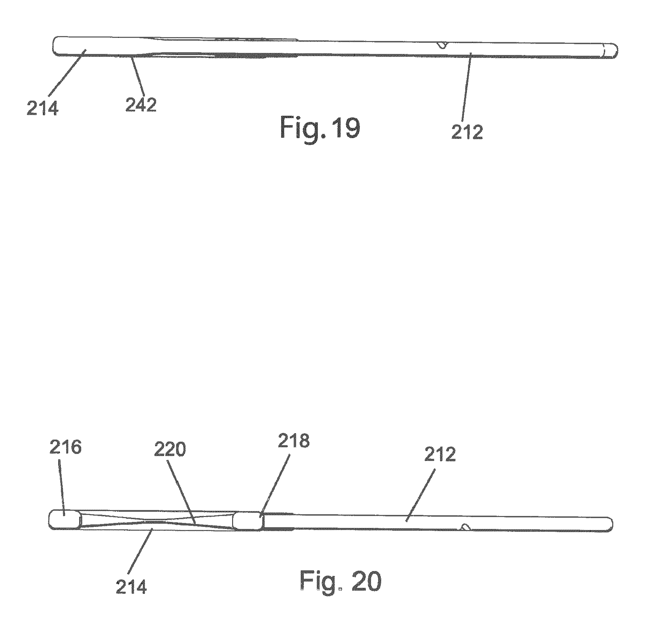

A third embodiment of the dental flosser 200 is shown in Figs. 14-20. In this embodiment, the flosser 200 includes a handle 212 and a single head 214. The handle 212 is substantially similar to the handle 112 described above, and therefore will not be described again in detail. In short, the handle 212 includes longitudinal ends 224, 226, and a central opening 221 with a pick 213 extending into the opening such that only a base end of the pick is attached within the opening 221, wherein the pick 213 can be accessed by bending the distal end portion 225 of the handle with respect to the first longitudinal end 224 to expose the pick 213.

The head 214 may include arms 216, 218 and a base 242, wherein the base 242 supports the arms 216, 218 with the arms 216, 218 spaced apart to support a strand of floss 220 extending in tension therebetween. Similar to the previous embodiments, in the illustrated embodiment the head 214 of this flosser 200 is generally U-shaped.

As illustrated, the flosser 200 includes a strand of floss 220 with a width that is non-uniform across its length (wherein the length is defined as the distance between the arms 216, 218 of the flosser 200). More particularly, in this embodiment, the width of the floss is at a minimum near the midpoint 221 of the length, and the width of the floss 220 increases in each direction as the floss approaches the arms 216, 218 such that the floss 220 has a maximum width immediately adjacent the arms 216, 218. In the illustrated embodiment, the floss is symmetrical on either side of the midpoint 223 and it gradually increases in width as it approaches the arms 216, 218. As shown, the floss 220 is shaped to form a pair of cones, each with an apex at the midpoint, and a base adjacent to one of the respective floss arms 216, 218.

The floss strand 220 may be made from a variety of materials, such as PTFE and UHMWPE as discussed in connection with the first and second embodiments. In one embodiment, the floss 220 is made from a known multifilament nylon material wherein the multifilament strands expand upon contact with moisture, such as saliva. In one embodiment, the expanded width portions of the floss 220 may be up to 75% larger in width (or diameter, depending on the cross sectional shape of the floss 220) than the narrower portions. The expansion of this material can be controlled or prevented with the use of coatings. For example, a non-water soluble coating may substantially prevent the floss strand from expanding during use, whereas a water soluble coating may enable the expansion when the floss is moistened upon insertion into the user's mouth. In addition, portions of the floss material may be pre-expanded during manufacture, by adding moisture or otherwise manipulating the portions of floss, to an expanded state prior to the sale of the product to customers. As illustrated, the widened portions of the floss strand 220 may be pre-expanded (i.e., prior to contact with the user's teeth and saliva) to have the illustrated variation in thickness. The non-expanded portions of the floss 220 may include a water soluble coating or non-water soluble coating as desired such that desired portions of the floss expand in width upon contact with water or saliva.

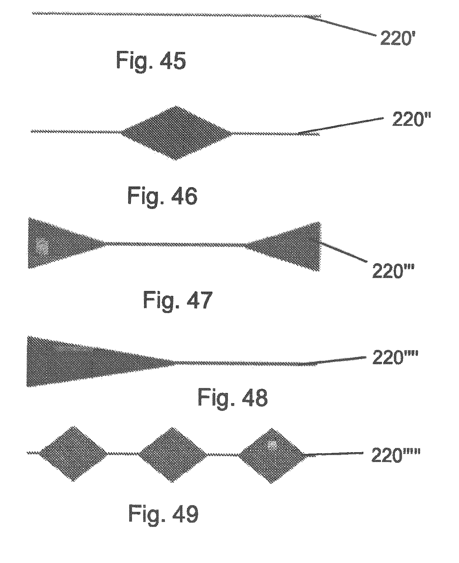

Alternative embodiments of an expanded floss strand 220 may also be used with the flosser 200, or in any other flosser embodiments. For example, Figs. 45-49 show a variety of alternative configurations, which may be created with the above noted expanding floss material. In Fig. 45 the floss 220' may not be pre-expanded, and may be coated with a water soluble coating such that the entire strand expands during use. Fig. 46 shows a configuration where a central region of the floss 220", at the mid-point 223 of the floss 220", is pre-expanded. The remainder of the floss 220" may be coated with a water soluble coating such that it expands during use to the width of the pre-expanded portion, or it may be coated with a non-water soluble coating such that it does not expand during use. Fig. 47 shows a configuration wherein the central region of the floss is not pre-expanded, and the end portions of the floss 220"' are expanded such that they increase in width approaching the arms 216, 218. Fig. 48 shows a configuration wherein only one-half of the floss strand 220"" is pre-expanded. The remainder of the floss 220"" may be coated as desired to expand or not expand during use. Fig. 49 shows yet another configuration of the expanded floss strand 220""' with variable width. In this configuration, intermittent sections of the floss strand 220""' are pre-expanded. More particularly, in the illustrated embodiment, three separate sections of the floss strand 220""' are pre-expanded to have a width greater than the remaining portions of the strand 220""'. The remainder of the floss 220""' may be coated as desired to expand or not expand during use. Other configurations are may be used, depending on the desired application. The pre-expanded portions of floss may be specifically positioned and arranged to increase the ease of inserting the floss between the user's teeth, while providing sufficient surface area to enable effective cleaning of the interstices between the user's teeth. For instance, the user may insert a narrowed, non-preexpanded, section of the floss 220 between the teeth for ease of insertion, and then slide the floss strand 220 back and forth between the teeth to enable the expanded portions to enter the interstices between the teeth and remove plaque and debris between the teeth.

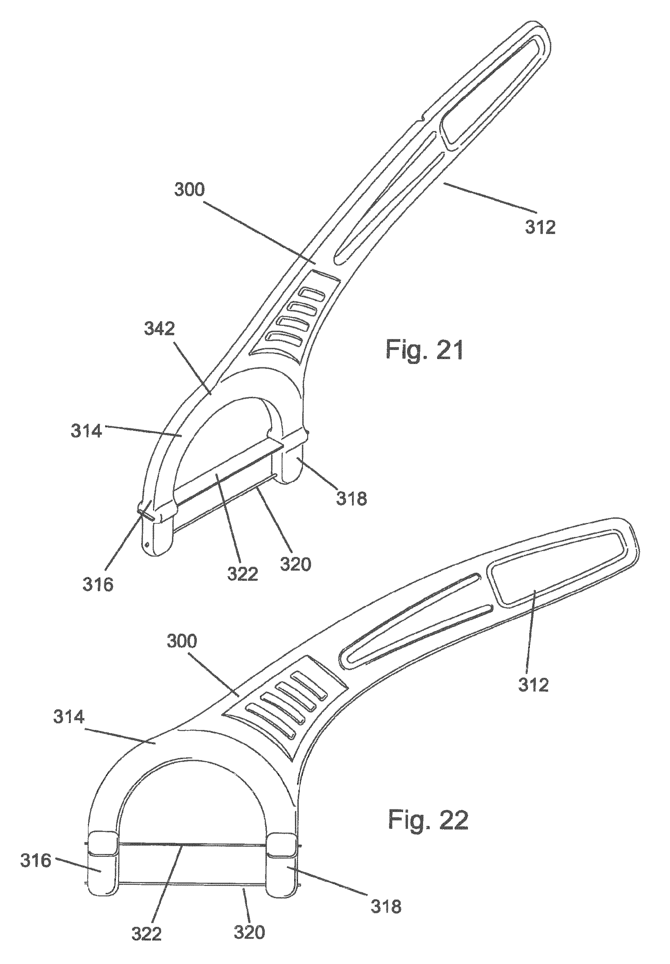

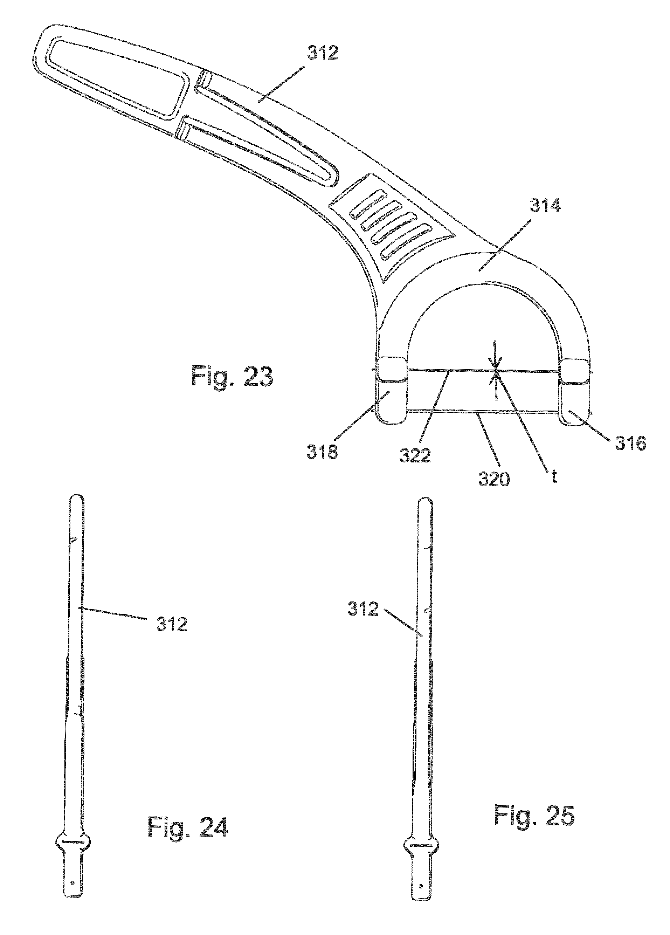

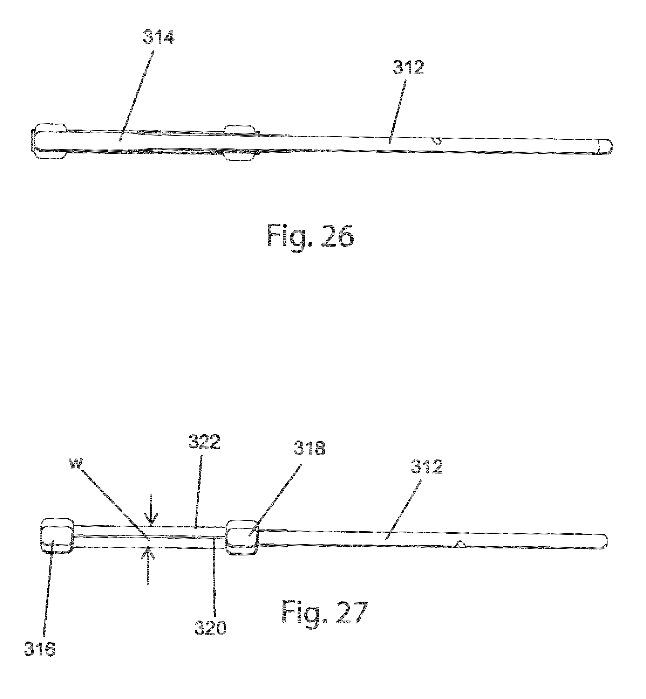

A fourth embodiment of the flosser 300 is shown in Figs. 21-27. The flosser 300 is formed of an injection-molded plastic handle part 312 and flosser head 314, the latter having a generally U-shape or V-shape comprising a base part 342 and extending from the base part a pair of spaced apart arms 316, 318 which are generally parallel to each other.

Extending transversely between and fixed to the terminal end parts 320 of each flosser arm 316, 218 is a set of two adjacent generally parallel strands of dental floss, including lead strand 320 and follower strand 322. As in the above noted embodiments, the strands of floss 320, 322 may be made from a variety of floss materials, such as PTFE, UHMWPE and nylon. In the illustrated embodiment, the lead strand 320 is narrower than the follower strand 322. More particularly, the wide strand 322 is generally in the form of a tape, such that in cross section it has a width dimension (w) and a thickness dimension (t), and the width dimension is greater than the thickness. As shown, the strand 322 is oriented so that the width dimension is generally perpendicular to the longitudinal length of the arms 316, 318, and the width is of sufficient size help prevent the strand 322 from insertion between the user's teeth. In this way, the narrower lead strand 320 can be used for easy insertion between the teeth and cleaning between the teeth, and the wider strand 322 can be used a guide against over-insertion and unwanted contact with the user's gums. This embodiment can be particularly useful for a user with sensitive gums, as the follower strand 322 can help the user to control the contact between the lead strand and the user's gums. In one embodiment, the width of the arms 316, 318 is increased in the areas contacting the floss strand 322 to adequately retain the floss strand 322.

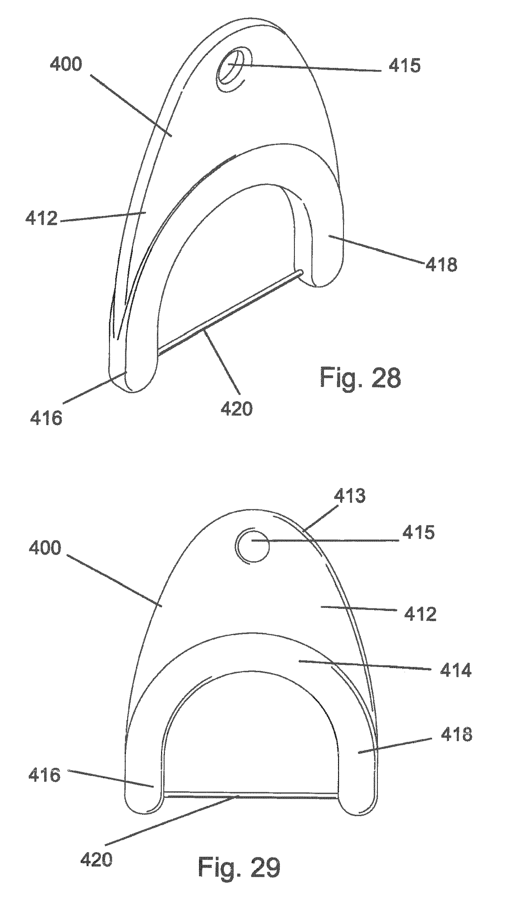

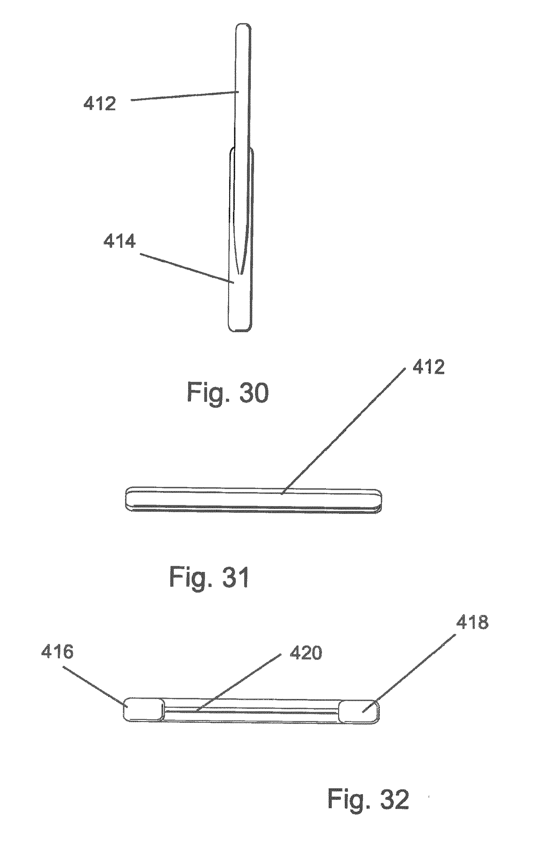

A fifth embodiment of the flosser 400 is shown in Figs. 28-32. In this embodiment, the flosser 400 includes a truncated flosser handle 412 with a rounded rear edge 413. As shown, the flosser handle 412 defines a circular opening 415, which may be used in connection with a particular packaging or dispenser designed to engage the opening 415 for selected dispensing of the flosser 400. The flosser head 414 may include arms 416, 418 and a base 442, wherein the base 442 supports the arms 416, 418 with the arms 416, 418 spaced apart to support a strand of floss 420 extending in tension therebetween. Similar to the previous embodiments, in the illustrated embodiment the head 414 of this flosser 400 is generally U-shaped. As illustrated, the longitudinal length of the head 414 is approximately the same as the longitudinal length of the arms 416, 418. Other shapes for the head 414 and flosser handle 412 may be used, depending on the desired application and the shape of any packaging or dispenser to which the flosser 400 may be enclosed. Furthermore, additional structures for attaching or receiving a dispenser or packaging, such as tabs, protrusions or notches on the handle 412 may be included instead of or in addition to the opening 415.

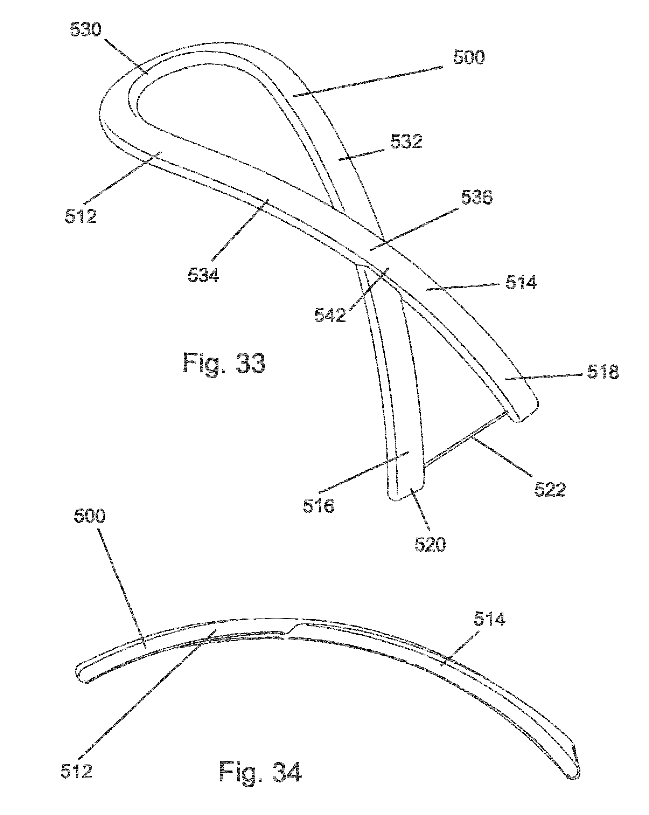

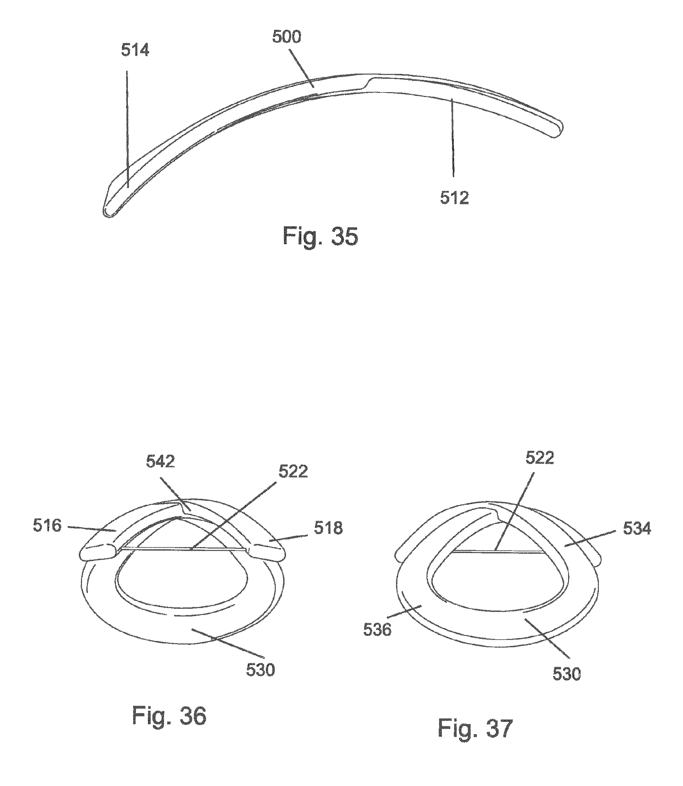

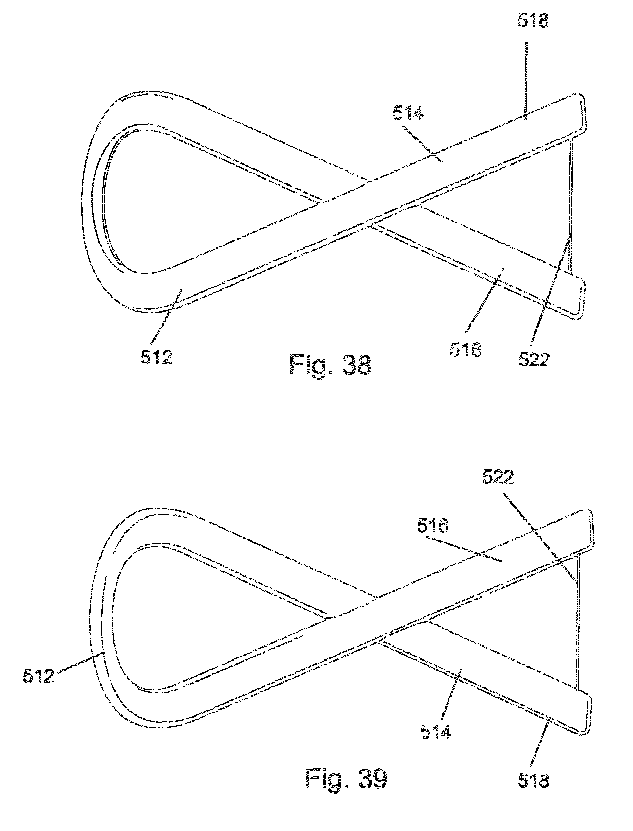

A sixth embodiment of the flosser 500 is shown in Figs. 33-39. In this embodiment, the flosser handle 512 and head 514 may be formed into a ribbon shape, wherein the handle 512 is generally U-shaped, having a curved base portion 530 and a pair of arms 532, 534 that converge to a cross-over point 536, which also forms the base 542 of the head 514. Arms 516, 518 extend from the cross-over point 536 in a divergent manner and terminate in distal end portions 520. A strand of floss 522 is supported between the spaced apart distal end portions 520. As shown in Fig. 35, the entire flosser 500, including the handle portion 512 and the head portion 514, may be formed into a gradually curved shape to enhance the ribbon-like appearance and provide an ergonomic handle shape for use as a flosser 500.

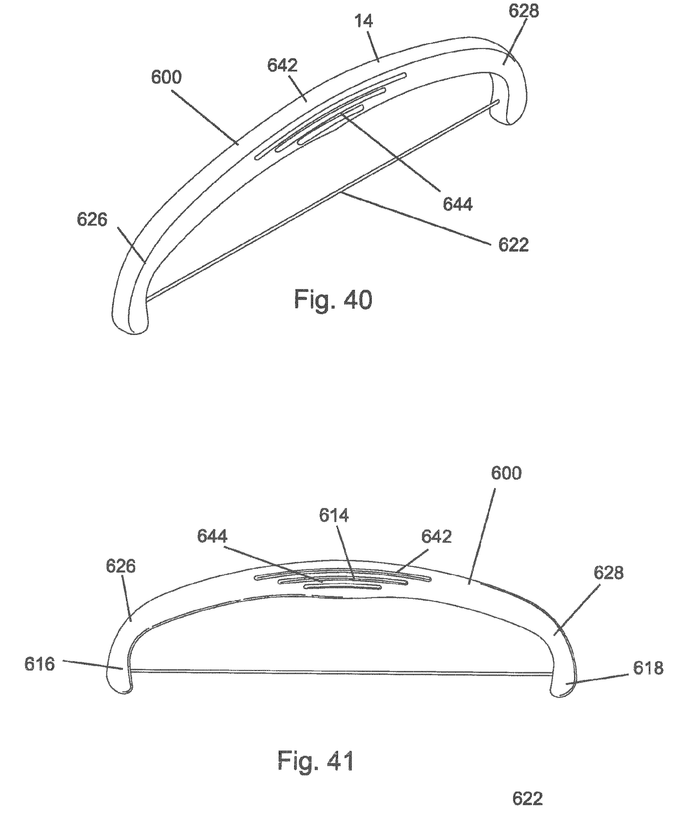

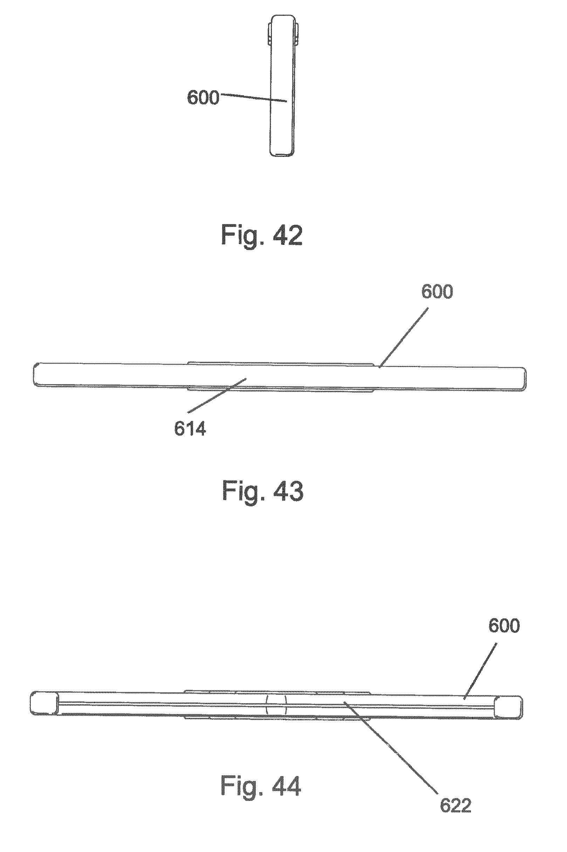

A seventh embodiment of the flosser 600 is shown in Figs. 40-44. In this embodiment, the flosser 600 includes an extra-long strand of floss 622, having a length, for example, of about 1" to about 3". The flosser 600 includes a head 614 that may also be used as the handle. The head includes a base portion 642, which may include a grip surface 644, such as a series of raised protrusions, for gripping by the user. The base 642 includes a length which may be approximately the same length as the strand of floss 622. The base 642 includes opposing ends 626, 628 from which the arms 616, 618 extend. The strand of floss 622 extends between the arms 616, 618 and is support in tension therebetween. In one embodiment, the arms 616, 618 define a width extending in the same direction as the length of the base 642. The width may increase approaching the ends 620 of the arms 616, 618 to increase the amount of surface contact between the floss 622 and the arms 616, 618 and this increase the amount of force required to pull the floss 622 from the arms 616, 618.

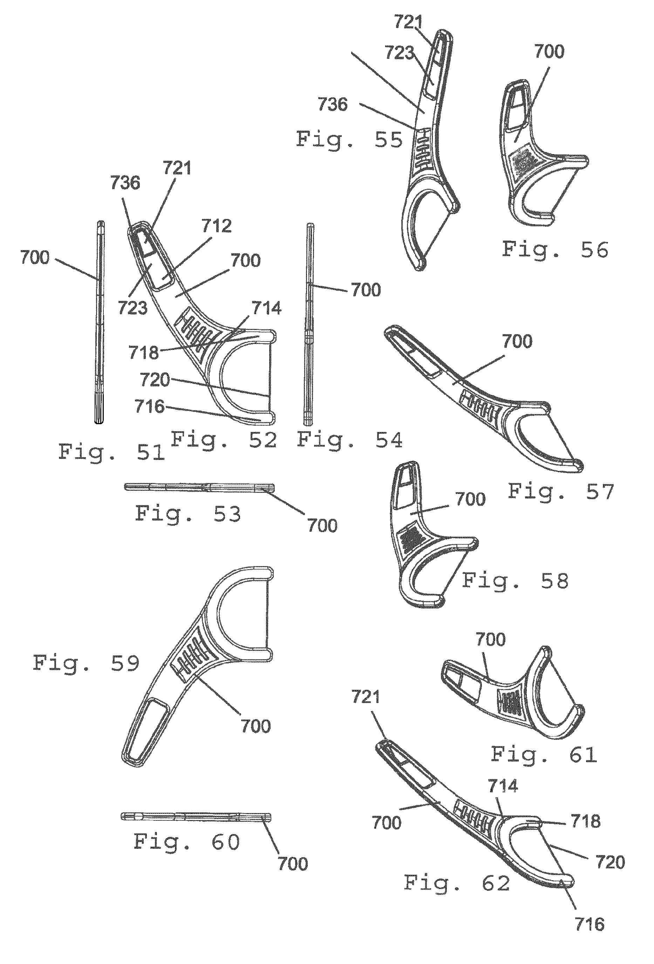

An eighth embodiment of the flosser 700 is shown in Figs. 51-62. This embodiment discloses a flosser 700 having a handle 712, and a head 714 extending from the handle 714 having a pair of arms 716, 718 and a strand of floss 720 extending therebetween. As illustrated, a flavored dissolving breath freshener strip 721 is attached to the handle 712 on an upper surface 736 of the handle 714. The breath freshener strip 721 may be embedded in the surface 736 of the handle 714 or may be removable from the handle 714 for use after flossing. In the illustrated embodiment, the breath freshener strip 721 is positioned within a recess 723 in the upper surface 736 of the handle 714.

In an alternative embodiment, the breath freshener strip 721 may be mounted or otherwise attached to a surface of any one of the above described embodiments, or another type of floss device. The breath freshener strip 721 may have a variety of shapes, and may be positioned in a variety of locations on a dental flosser. For example, the breath freshener strip 712 may be positioned on the head 714, or arms 716, 718 such that it may contact the user's mouth during flossing. In yet another embodiment, a different type of breath freshener may be substituted for the breath freshener strip as illustrated. For example, a breath mint or a flavored coating may be attached or applied to the dental flosser 700 for use by a consumer before, after or during flossing.

The above description is that of current embodiments of the invention. Various alterations and changes can be made without departing from the spirit and broader aspects of the invention as defined in the appended claims, which are to be interpreted in accordance with the principles of patent law including the doctrine of equivalents. For example, any of the flosser heads described in the above noted embodiments may include more than one strand of floss extending between the arms. The floss strands for any of the embodiments may be produced from any of the noted floss materials, or other conventional floss materials. Any of the embodiments could include a handle with the fold away pick as shown in Fig. 50, or alternatively could include an exposed, generally conventional pick. Any of the embodiments could include a variety of handle shapes, depending on the application and desired aesthetics. This disclosure is presented for illustrative purposes and should not be interpreted as an exhaustive description of all embodiments of the invention or to limit the scope of the claims to the specific elements illustrated or described in connection with these embodiments. For example, and without limitation, any individual element(s) of the described invention may be replaced by alternative elements that provide substantially similar functionality or otherwise provide adequate operation. This includes, for example, presently known alternative elements, such as those that might be currently known to one skilled in the art, and alternative elements that may be developed in the future, such as those that one skilled in the art might, upon development, recognize as an alternative. Further, the disclosed embodiments include a plurality of features that are described in concert and that might cooperatively provide a collection of benefits. The present invention is not limited to only those embodiments that include all of these features or that provide all of the stated benefits, except to the extent otherwise expressly set forth in the issued claims. Any reference to claim elements in the singular, for example, using the articles "a," "an," "the" or "said," is not to be construed as limiting the element to the singular.

## Claims

1. A dental flosser comprising:
a plastic handle having a longitudinal length and first and second ends,
a first flosser head at said first end of said handle, said first flosser head including a pair of spaced apart arms and a first strand of floss extending between said arms, said arms extending at an angle to said longitudinal length of said handle;
a second flosser head at said second end of said handle, said second flosser head including a pair of spaced apart arms and a second strand of floss extending therebetween, said arms of said second flosser head extending generally parallel to said longitudinal length of said handle.

2. The dental flosser of claim 1, wherein said first strand of floss extends perpendicular to said second strand of floss.

3. The dental flosser of claim 1 or 2, wherein said handle includes first and second side surfaces capable of being gripped by a user, said side surfaces lying in a plane that is generally parallel to the plane of said first flosser head and said first strand of floss.

4. The dental flosser of claim 3, wherein said first and second side surfaces are generally flat.

5. The dental flosser of any of the preceding claims, wherein said handle, said first flosser head and said second flosser head are a unitary, integrally molded piece.

6. The dental flosser of any of the preceding claims, wherein at least one of said first strand of floss and said second strand of floss has a non-uniform thickness across its length.

7. The dental flosser of claim 6, wherein said at least one of said first and second strands of floss defines a length having a midpoint, and wherein said strand of floss has a minimum thickness at about said midpoint.

8. The dental flosser of claim 7, wherein said at least one of said first and second strands of floss gradually increases in thickness extending away from said midpoint toward said arms.

9. The dental flosser of any of the preceding claims, including a breath freshener attached to one of said handle and said first and second flosser heads.

10. The dental flosser of claim 9, wherein said breath freshener is a dissolvable flavored breath freshener strip.

11. The dental flosser of any of the preceding claims, wherein at least one of said first and second flosser heads includes a third strand of floss extending between said arms, such that said one of said first and second flosser heads includes two strands of floss, with one of said stands positioned closer to a distal end of said arms.

12. The dental flosser of claim 11, wherein said one of said strands of floss is narrower in thickness than the other of said strands of floss.

13. The dental flosser of claim 12, wherein the other of said strands of floss is generally in the form of a tape, such that in cross section it has a width dimension and a thickness dimension, and wherein said width dimension is greater than said thickness, wherein said strand is oriented so that said width dimension is generally perpendicular to a longitudinal length of said arms between which it extends.
